Europäisches Patentamt

(19) European Patent Office

Office européen des brevets

(11) Publication number : **0 454 411 A2**

# EUROPEAN PATENT APPLICATION

(12)

(21) Application number : 91303620.8

(22) Date of filing : 23.04.91

(51) Int. Cl.⁵ : **C08J 3/20, C08K 5/09, C08K 5/14, C08L 21/00**

(30) Priority : 23.04.90 JP 106713/90
23.04.90 JP 106715/90
23.04.90 JP 43226/90 U

(43) Date of publication of application :
30.10.91 Bulletin 91/44

(84) Designated Contracting States :
**DE FR GB**

(71) Applicant : **SUMITOMO RUBBER INDUSTRIES LIMITED**
**1-1 Tsutsuicho 1-chome Chuo-ku**
**Kobe-shi Hyogo-ken (JP)**

(72) Inventor : **Noyama, Tomoko**
**2-16-8, Takatsukasa**
**Takarazuka-shi, Hyogo-ken (JP)**
Inventor : **Nakahara, Akihiro**
**1-15-22, Oda**
**Ibaragi-shi, Osaka-fu (JP)**

(74) Representative : **Allard, Susan Joyce et al**
**BOULT, WADE & TENNANT, 27 Furnival Street**
**London EC4A 1PQ (GB)**

(54) Production of rubber article.

(57) The present invention provides a novel process which imparts anisotropy of strength to a rubber article. The process of the present invention comprises
mixing a rubber composition under shearing force in a certain direction and
then vulcanizing it in a mold, wherein said rubber composition comprises a base rubber, 3 to 100 parts by weight of a metal salt of an alpha, beta-unsaturated fatty acid, and 0.5 to 5.0 parts by weight of an organic peroxide ; parts by weight being based on 100 parts by weight of base rubber.

EP 0 454 411 A2

Fig. 1

The present invention relates to a process for preparing a rubber article which has anisotropy of strength. More particularly, the present invention relates to a process for preparing rubber article which has a high strength in a certain direction and does not have such high strength in the other directions, and a rubber article prepared therefrom.

A rubber material which has rubber resilience and anisotropy of strength has been recently desired for mechanical parts, sports goods, hoses and the like.

In order to impart the anisotropy of strength to a rubber article, it is known that fibers (e.g. short fibers) or fillers (e.g. silica and mica) may be mixed into the rubber composition under shearing force and oriented in a certain direction. In this process, however, since the fibers have a poor miscibility with rubber, it takes a long time before the rubber composition is sufficiently mixed to disperse the fibers. The rubber composition thus obtained often gives rise to problems in dispersibility and retention of fiber form (e.g. breaking or bending of fibers). If the fillers are formulated for anisotropy of strength, a large amount of fillers should be formulated into the rubber composition in order to impart sufficient orientation. It adversely affects the physical properties (e.g. tensile strength, wear resistance and compression set) of the resulting rubber.

The present invention provides a process which imparts anisotropy of strength to a rubber article without the above mentioned problems. The process of the present invention comprises

mixing a rubber composition under shearing force in a certain direction and

then vulcanizing it in a mold,

wherein the rubber composition comprises a base rubber, 3 to 100 parts by weight of a metal salt of an alpha, beta-unsaturated fatty acid, and 0.5 to 5.0 parts by weight of an organic peroxide; parts by weight being based on 100 parts by weight of base rubber.

The present invention also provides a rubber article obtained by the above mentioned process.

The present invention further provides an application of the rubber article.

The base rubber employed in the present invention is not limited, including butadiene rubber, styrene-butadiene rubber, EPDM, isoperene rubber, chloroprene rubber, natural rubber, or a mixture thereof. Preferred is cis-1,4-polybutadiene rubber which has a cis-structure of 90 % or more.

The metal salt of alpha, beta-unsaturated fatty acid employed in the present invention preferably is a metal salt of a unsaturated acid having 3 to 8 carbon atoms. Examples of the unsaturated acid having 3 to 8 carbon atoms are acrylic acid, methacrylic acid, itaconic acid, and crotonic acid. The metal for forming the metal salt includes divalent metals, such as zinc, magnesium and calcium; monovalent metals, such as sodium and lithium; and other metals, such as aluminum. The alpha, beta-unsaturated fatty acid is present in the rubber composition in an amount of 3 to 100 parts by weight, preferably 10 to 70 parts by weight, based on 100 parts by weight of the base rubber. Amounts of less than 3 parts by weight do not impart anisotropy of strength and those of more than 100 parts by weight give poor workability because of the hardness of the composition.

The organic peroxide employed in the present invention is not limited. Examples are perbenzoic acid, benzoyl peroxide, cumen peroxide and dicumyl peroxide. The organic peroxide is present in the rubber composition in an amount of 0.5 to 5.0 parts by weight, preferably 1.0 to 3.0, based on 100 parts by weight of the base rubber. Amounts of more than 5.0 parts by weight increase fragility.

It is known that the metal salt of alpha, beta-unsaturated acid is co-crosslinked with rubber backbones to impart hardness and durability to cured rubber. It, however, has been surprisingly found by the present inventors that the crystals of the metal salt of alpha, beta-unsaturated acid are oriented along with the direction of the rubber molecules in the rubber composition when mechanically mixed. This is identified by X ray diffraction. The present inventors alos have found that, when the rubber composition containing the metal salt of alpha, beta-unsaturated acid is mixed under shearing force in a certain direction and then vulcanized without destroying the crystal orientation, the resulting rubber article is very strong in the orientation direction and is not so strong in the other directions, especially in the direction perpendicular to the orientation direction. It is further found that the rubber article of the present invention has anisotropy of elongation similar to the anisotropy of strength. The rubber article has a high elongation in the rubber orientation direction, but not so high in the other directions.

The rubber composition may contain a reinforcing agent and additives, if necessary. If the reinforcing agent, especially short fiber, is added to the rubber composition, the obtained rubber article has more superior physical properties. For examples, the short fiber can enthusiastically enhance the anisotropy of strength in the rubber article. The short fiber includes art-known synthetic fiber, such as carbon fiber, alumina fiber, polyamide fiber, carbonized silicon fiber, silica fiber, boron fiber, potassium titanate fiber, polyester fiber, polyvinyl alcohol fiber, polyacryl fiber, polyacrylonitrile fiber, polyvinyl chloride fiber, polyvinylidene fiber, polyethylene fiber, polypropylene fiber, polyurea fiber and the like; and natural fiber, such as hemp fiber and the like. The fibers may be pretreated to strengthen them or to increase adhesive ability with the rubber. Preferred fiber is polyacrylonitrile fiber or polyamide fiber, especially nylon fiber. The short fiber preferably has a lenght of 1 micrometer or more, more preferably 30 mm or less and a diameter of 10 μm denier or more. For nylon fiber, 5 denier or more is preferred. The most preferred fiber has a length of 1 mm or more and a diameter of 10 μm or more. The short fiber may be present in the rubber composition in an amount of 3 to 100 parts by weight, preferably 10 to 50 parts by weight, based on 100 parts by weight of the base rubber. Amounts of less than 3 parts by weight does not exhibit the effect of the addition of the fiber and those of more than 100 parts by weight may give rise to problems in moldability.

A method of mixing under shearing force in a certain direction may be conducted by a roll, an extruder, an injection molder and the like. The orientation direction is equal to a circumferential direction of the roll and to an extrusion direction in the extruder. It is also equal to an injection direction in the injection molder.

The rubber composition is then vulcanized under conventional conditions, for example at 140 to 170°C for 10 to 40 minutes in a mold. The physical properties of the rubber article may be changed by laminating rubber composition sheets such that the orientation directions are uniform or cross and then vulcanizing.

It is preferred that the rubber composition is formed to rubber hoses by winding it on a mandrel such that the rubber orientation direction is adjusted to the circumferential direction of the mandrel. The resulting rubber hoses have a high strength in their circumferential directions and soft for bending. The rubber article of the present invention may be a timing belt, a chain, a rubber spring and the like. It is also preferred that the rubber articles of the present invention are rubber soles for shoes.

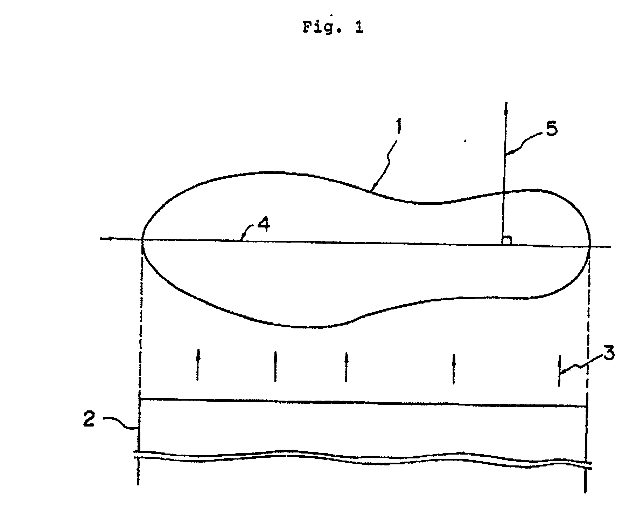

Figure 1 is a drawing which shows a direction in which an orientation direction of the rubber composition of the present invention is adjusted.

As shown in Figure 1, the rubber sole 1 of the present invention preferably aligns the rubber orientation direction 3 along with a direction 5 perpendicular to a walking direction 4. The rubber sole 1 of the present invention has properties that it is easily bent in the walking direction and is not bent so much in the direction perpendicular to the walking direction, which therefore is very suitable for rubber soles of sports shoes. The rubber sole, of course, has the other necessary properties, such as durability, wear resistance and cushioning characteristics.

The present invention can provide a rubber article by a process which has never been considered in the rubber field. The process of the present invention may reduce production cost and provide a rubber article which has excellent physical properties.

EXAMPLES

The present invention will be illustrated by the following Examples which, however, are not to be construed as limiting the present invention to their details.

Example 1

A rubber composition was prepared by mixing 80 parts by weight of butadiene rubber, 20 parts by weight of natural rubber, 65 parts by weight of basic zinc methacrylate, 0.7 parts by weight of an antioxidant and 1.0 part by weight of dicumyl peroxide using a roll under shear force to the circumferential direction of the roll. The resulting rubber composition was wound around a mandrel of an inner diameter of 5 mm and then put in a cylindrical mold having an outside diameter of 18 mm, followed by vulcanizing at 150°C for 30 minutes. When the rubber composition was wound around the mandrel, one was wound such that the rubber orientation direction was adjusted to the circumferential direction of the mandrel, which is called "circumferential" and the other was done such that the rubber orientation direction was adjusted to the longitudinal direction of the mandrel, which is call "longitudinal".

Each obtained rubber pipe was supported by two supports at 70 mm distance interval and a maximum stress was determined by putting down a portion between the supports. A rate for putting down was 10 mm/minute. The results are shown in Table 1.

Table 1

|  | Maximum bending stress (Kgf) |
| --- | --- |
| Circumferential | 16.4 |
| Longitudinal | 29.2 |

4

The above obtained rubber composition was formed to sheet under the same vulcanizing conditions and then was drawn to the rubber orientation direction or to a direction perpendicular thereto to determine tensile strength, tear strength and elongation. The results are shown in Table 2.

Table 2

|  | Tensile strength $(Kg/cm^2)$ | Tear strength $(Kg/cm)$ | Elongation (%) |
|---|---|---|---|
| Rubber orientation | 175.9 | 67.6 | 297 |
| Perpendicular | 151.3 | 65.4 | 468 |

Subsequently, the sheetes were employed and their coefficients of linear expansion both to the rubber orientation direction and a direction perpendicular thereto were determined by an apparatus called SN #230 available from Rigaku Electric Company. The results are shown in Table 3.

Table 3

Coefficient of linear expansion

| Orientation | $1.3 \times 10^{-4}$ /°C |
|---|---|
| Perpendicular | $3.2 \times 10^{-4}$ /°C |

The above results show that the rubber article of the present invention has anisotropy of strength.

Examples 2 to 5

A rubber composition was prepared by mixing the formulation shown in Table 4 by a roll under shear force in the circumferential direction of the roll. The obtained rubber composition was vulcanized at 160°C for 30 minutes to form a sheet having a thickness of about 2 mm. It was subjected to tests for tensile strength ($Kg/cm^2$; Tb), elongation at breaking (%; Eb), tear strength ($Kg/cm$; Tr) and hardness (JIS-A) according to JIS K6301 in the two directions(i.e. roll direction and a direction perpendicular to the roll direction). The results are also shown in Table 4. Ratios of physical properties between the two direction are also shown in Table 4.

5

## EP 0 454 411 A2

Table 4

| Formulation | Examples | | | |
|---|---|---|---|---|
| | 2 | 3 | 4 | 5 |
| BR 11[1] | 100 | 100 | 100 | 100 |
| Nylon 66[2] = 7denier-5mm | 20 | – | – | – |
| = 14denier-5mm | | 20 | 20 | 15 |
| Basic zinc methacrylate | 29.1 | 29.1 | 20.0 | 29.1 |
| Dicumyl peroxide | 1 | 1 | 1 | 1 |
| (Roll direction) | | | | |
| Tb | 262 | 283 | 221 | 221 |
| Eb | 35 | 36 | 34 | 32 |
| Tr | 68 | 66 | 54 | 60 |
| (Perpendicular) | | | | |
| Tb | 83 | 66 | 41 | 64 |
| Eb | 48 | 40 | 36 | 42 |
| Tr | 33 | 26 | 18 | 19 |
| (Ratio) | | | | |
| Tb | 3.16 | 4.29 | 5.39 | 3.45 |
| Eb | 0.73 | 0.90 | 0.94 | 0.76 |
| Tr | 2.06 | 2.54 | 3.00 | 3.15 |
| Hardness | 91 | 92 | 90 | 91 |

[1] A butadiene rubber available from Nippon Synthetic Rubber Co., Ltd. (cis 1,4 content 96%).

[2] Nylon short fiber available from Teijin Ltd.

## Example 6

A rubber composition was prepared by mixing 70 parts by weight of butadiene rubber, 15 parts by weight of natural rubber, 15 parts by weight of EPDM, 65 parts by weight of basic zinc methacrylate, 10 parts by weight of calcium carbonate, 0.5 parts by weight of an antioxidant (available from Ohuchi Shinko Chemical Company as Nocrack 300) and 1.0 part by weight of dicumyl peroxide using a roll under shear force to the circumferential direction of the roll. The resulting rubber composition was vulcanized at 160°C for 30 minutes such that the rubber orientation direction was adjusted to a direction perpendicular to the walking direction, as shown in Fig.1 to form rubber soles. Light mountain-climbing shoes were prepared using the rubber soles. The shoes were very easy to walk, because it has high bending ability to the walking direction but no slide to a direction perpendicular thereto.

## Claims

1. A process for preparing a rubber article having anisotropy of strength, comprising mixing a rubber composition under a shearing force in a certain direction and then vulcanizing it in a mold, wherein the rubber composition comprises a base rubber, 3 to 100 parts by weight of a metal salt of an alpha, beta-unsaturated fatty acid, and 0.5 to 5.0 parts by weight of an organic peroxide; parts by weight being based on 100 parts by weight of base rubber.

2. A process as claimed in Claim 1 wherein the base rubber is a butadiene rubber, styrene-butadiene rubber, EPDM, isoprene rubber, chloroprene rubber, natural rubber, or a mixture thereof.

3. A process as claimed in Claim 1 or Claim 2 wherein the base rubber is cis-1,4-polybutadiene rubber having a cis-structure of 90% or more.

4. A process as claimed in any one of the preceding claims wherein the metal salt of the alpha, beta-unsaturated fatty acid is a zinc, magnesium or calcium salt of acrylic acid, methacrylic acid, itaconic acid or crotonic acid.

5. A process as claimed in any one of the preceding claims wherein the metal salt of alpha, beta-unsaturated fatty acid is basic zinc methacrylate.

6. A process as claimed in any one of the preceding claims wherein the organic peroxide is perbenzoic acid, benzoyl peroxide, cumen peroxide, dicumyl peroxide, or a mixture thereof.

7. A process as claimed in any one of the preceding claims wherein the rubber composition further comprises a reinforcing agent and/or additives.

8. A process as claimed in any one of the preceding claims wherein the reinforcing agent comprises short fibers having a length of 1 micrometre or more and a diameter of 5 micrometres or more.

9. A process as claimed in any one of the preceding claims wherein the short fibers are present in the rubber composition in an amount of 3 to 100 parts by weight, based on 100 parts by weight of the base rubber.

10. A process as claimed in any one of the preceding claims wherein mixing under shearing force in a certain direction is conducted by a roll, an extruder or an injection molder.

11. A rubber article obtained by a process as claimed in any one of the preceding claims which is in the form of hoses, timing belts, chains, rubber springs or rubber soles for shoes.

12. A rubber article as claimed in Claim 11 wherein the rubber soles for shoes are prepared by aligning the rubber orientation direction in the direction perpendicular to the intended walking direction.

Fig. 1